# FASCICULE DE BREVET EUROPEEN

(11) **EP 2 541 505 B1**
(45) Date de publication et mention de la délivrance du brevet: **18.03.2020**
(21) Numéro de dépôt: 12004534.9
(22) Date de dépôt: 15.06.2012
(51) Int. Cl.: G07C 5/08, G05B 23/00

(54) **Procédé de surveillance d'un aéronef par acquisitions vibratoires**
Verfahren zur Überwachung eines Luftfahrzeugs durch Schwingungserfassung
Method for monitoring an aircraft by vibration acquisitions

(30) Priorité: 30.06.2011 FR 1102050
(43) Date de publication de la demande: 02.01.2013
(73) Titulaire: Airbus Helicopters, 13725 Marignane Cedex (FR)
(72) Inventeur: Morel, Hervé, 13113 Lamanon (FR)
(74) Mandataire: GPI & Associés

(56) Documents cités:
- EP-A2- 1 258 618
- WO-A1-2010/040966
- WO-A2-2008/152256
- FR-A1- 2 941 049
- US-A1- 2005 096 873
- US-A1- 2009 271 067

## Description

La présente invention concerne un procédé de surveillance d'un aéronef par acquisitions vibratoires.

L'invention se situe notamment dans le domaine technique général de la mesure vibratoire et du traitement vibratoire, de la reconnaissance de phase de vol et de la reconnaissance de spectre de vol, grâce à des dispositifs embarqués. Parmi ces dispositifs, on peut citer le dispositif connu sous l'acronyme « HMS » dénommé « Health Monitoring system » en langue anglaise, ou encore le dispositif connu sous l'acronyme « HUMS » dénommé « Health and Usage Monitoring system » en langue anglaise.

La présente invention concerne plus particulièrement les acquisitions vibratoires et la configuration de logiciels embarqués pour effectuer ces acquisitions vibratoires. Ces acquisitions vibratoires permettent de détecter des anomalies de fonctionnement voire l'endommagement d'organes de l'aéronef. En fonction de ces acquisitions vibratoires, un constructeur peut en effet décider de déclencher une action de maintenance pouvant par exemple conduire au remplacement ou au réglage d'organes de l'aéronef.

La présente invention trouve son application notamment dans tous types d'aéronefs susceptibles d'effectuer un vol stationnaire, tels que des giravions, hélicoptères, aéronefs hybrides ou convertibles. Dans la suite on utilisera le terme « aéronef » de manière générale et non limitative.

Une acquisition vibratoire est définie dans la présente description comme étant un enregistrement automatique, déclenché par une fonction avionique, de mesures issues de capteurs.

Pour un aéronef donné, le constructeur définit une pluralité de types d'acquisition vibratoire prévus pour cet aéronef, voire des paramètres utiles dimensionnant cet aéronef donné.

Chaque type d'acquisition vibratoire est défini par un ensemble de caractéristiques incluant une unique condition d'acquisition indiquant quand une acquisition vibratoire doit être réalisée, et au moins une caractéristique d'acquisition définissant la manière de réaliser l'acquisition vibratoire.

Par exemple, la condition d'acquisition de chaque type d'acquisition vibratoire est la phase de vol durant laquelle l'acquisition vibratoire doit avoir lieu. On entend donc par « condition d'acquisition » une phase de vol durant laquelle une acquisition vibratoire doit être entreprise.

Chaque caractéristique d'acquisition peut être choisie dans une liste incluant un dispositif de mesure vibratoire à activer, une fréquence d'échantillonnage, un nombre d'échantillons à acquérir, une fréquence de coupure haute.

Un type d'acquisition vibratoire acqₖ est alors défini d'une part par la condition d'acquisition qui doit être vérifiée pour qu'une acquisition vibratoire puisse être réalisée, et d'autre part par des éléments permettant d'exécuter l'acquisition vibratoire.

Dans la suite, une phase de vol est définie comme étant un état de progression particulier de l'aéronef, lié à un usage particulier dudit aéronef. Pour chaque type d'aéronef, on définit une liste de phases de vol comprenant par exemple:
- une phase de vol ϕ1, correspondant à un fonctionnement au sol avec NR<NRnominal, NR étant la vitesse de rotation du ou d'un rotor principal,
- une phase de vol ϕ2, correspondant à un fonctionnement au sol avec NR=NRnominal,
- une phase de vol ϕ3, correspondant à un vol stationnaire dans un effet de sol,
- une phase de vol ϕ4, correspondant à un vol stationnaire hors effet de sol,
- une phase de vol ϕ5, correspondant à un vol de croisière,
- une phase de vol ϕ6, correspondant à un vol à puissance maximale.

Ainsi, les dispositifs embarqués connus déclenchent successivement des acquisitions vibratoires, chaque acquisition vibratoire se conformant à un type d'acquisition vibratoire prédéterminé, et n'étant donc possible que durant l'unique phase de vol spécifiée dans ce type d'acquisition vibratoire prédéterminé.

Les documents US 2005/0096873 A1 et FR2941049 A1 décrivent ces types de dispositifs embarqués.

Pour chaque aéronef donné, on définit ensuite un spectre de vol comprenant d'une part l'ensemble des phases de vol, et d'autre part le temps d'utilisation cumulé de chaque phase de vol à partir d'une date donnée.

On comprend que l'on cumule les informations résultant de tous les vols réalisés à partir de ladite date donnée.

Par exemple, le spectre de vol peut être visualisé sous la forme d'un histogramme présentant en abscisses les différentes phases de vol et en ordonnées le temps d'utilisation cumulé de chaque phase de vol.

On note que deux aéronefs distincts d'un même modèle peuvent être utilisés pour des missions différentes générant ainsi deux spectres de vols différents. A titre d'exemple, un premier utilisateur n'utilise pas un aéronef dans la phase de vol ϕ6 alors qu'un deuxième utilisateur utilise un aéronef essentiellement durant la phase de vol ϕ6.

Selon ce procédé, le manque de flexibilité et d'adaptabilité aux différentes missions des différents opérateurs d'aéronefs engendre une quantité d'acquisitions vibratoires plus ou moins importante selon lesdites missions et selon les types d'acquisition.

Dans le cadre de l'exemple précédent, pour un type d'acquisition spécifiant la phase de vol ϕ6, le premier utilisateur n'obtient pas d'acquisition vibratoire durant la phase de vol ϕ6, contrairement au deuxième utilisateur.

Or, pour chaque type d'acquisition vibratoire, il est avantageux d'obtenir le plus grand nombre possible d'acquisitions vibratoires, afin d'obtenir un maximum de données utiles à l'analyse de maintenance qui succède à chaque vol.

Il est concevable d'adapter le dispositif embarqué à chaque utilisation possible d'un aéronef. Cependant, une telle adaptation aurait pour conséquence d'augmenter substantiellement les coûts de certification et de gestion de configurations dudit dispositif.

Selon une autre option, on peut définir des types d'acquisition vibratoire comprenant des phases de vol définies de manière large pour obtenir des données couvrant de multiples façons d'utiliser un aéronef. Toutefois, les acquisitions vibratoires risquent alors de perdre de leur utilité.

Par exemple, un type d'acquisition vibratoire peut être associé à une phase de vol de croisière couvrant une plage de vitesse longitudinale d'avancement allant de 80 nœuds à 120 nœuds afin d'englober de multiples utilisations. Toutefois, un vol à 80 nœuds et un vol à 120 nœuds induisent des sollicitations distinctes des divers organes de l'aéronef.

Dès lors, des acquisitions vibratoires réalisées à des vitesses longitudinales d'avancement trop éloignées l'une de l'autre ne peuvent pas être comparées, et ne peuvent donc pas fournir des conclusions intéressantes en termes de maintenance pour le constructeur.

Le but de la présente invention vise à s'affranchir des limitations précisées ci-dessus en évitant de développer une configuration spécifique pour chaque client.

La présente invention a aussi pour objet de proposer un nouveau procédé de commande d'exécution automatique d'une acquisition vibratoire d'un aéronef.

Parmi l'arrière plan technologique, on connaît les documents Ep1258618 et WO2010/040966.

On connaît aussi le document FR 2941049. Ce document décrit un procédé de surveillance de phénomènes vibratoires survenant dans moteur à turbine à gaz.

Selon ce procédé, on acquiert un signal vibratoire lors d'une période prédéfinie de fonctionnement du moteur. Dès lors, on établit un spectre de fréquences du signal.

Il est à noter qu'un spectre de fréquences n'est pas assimilable au spectre de vol précédemment décrit.

Par suite, le procédé consiste à utiliser une pluralité de signatures vibratoires correspondant chacune à un phénomène vibratoire survenant lors du fonctionnement des moteurs d'aéronefs du même type que celui à surveiller et ayant pour origine un défaut ou un fonctionnement anormal d'un composant des moteurs, identifier dans le spectre de fréquences les points de courbes qui répondent à des fonctions mathématiques définissant chacune une signature vibratoire. Pour chaque courbe identifiée correspondant à un défaut de composants du moteur, on analyse l'amplitude associée aux points de la courbe par rapport à des valeurs d'amplitude prédéfinies correspondant à un degré de sévérité du défaut, et suite au dépassement d'une valeur d'amplitude ou à la détection d'un fonctionnement anormal, on émet un message associé à la signature vibratoire.

Le but et les objets assignés à l'invention sont atteints à l'aide d'un procédé au cours duquel, durant une étape préalable aux vols :
- on établit une pluralité de types d'acquisition vibratoire spécifiant chacun au moins une condition d'acquisition déterminant quand une acquisition vibratoire doit être entreprise et au moins une caractéristique d'acquisition déterminant comment réaliser ladite acquisition vibratoire, une caractéristique d'acquisition incluant au moins un dispositif de mesure vibratoire, chaque condition d'acquisition étant une phase de vol, éventuellement à choisir dans une liste de phases de vol ϕi,
- on initialise un spectre de vol associant chaque phase de vol à une durée d'utilisation de cette phase de vol depuis une date donnée.

Dès lors, en vol :
- a) on lit des paramètres de vol mesurés par des capteurs de paramètres de vol,
- b) on détermine une phase de vol courante en fonction des paramètres de vol mesurés,
- c) on actualise le spectre de vol en modifiant la durée d'utilisation de la phase de vol courante,
- d) au moins un type d'acquisition vibratoire spécifiant une pluralité de conditions d'acquisition, une condition d'acquisition élue du type d'acquisition vibratoire étant la condition d'acquisition relative à la phase de vol de ce type d'acquisition vibratoire ayant la durée d'utilisation la plus élevée, on réalise une acquisition vibratoire selon un type d'acquisition vibratoire particulier lorsque la condition d'acquisition élue dudit type d'acquisition vibratoire particulier est égale à ladite phase de vol courante.

Par suite, alors que l'état de la technique s'appuie sur des types d'acquisition vibratoire basés chacun sur une unique phase de vol, l'invention offre la possibilité de spécifier au moins deux phases de vol dans au moins un type d'acquisition.

Par exemple, un type d'acquisition dit « de croisière » peut comporter trois conditions d'acquisition distinctes, une première condition d'acquisition étant une première phase de vol de croisière à une première vitesse, une deuxième condition d'acquisition étant une deuxième phase de vol de croisière à une deuxième vitesse, et une troisième condition d'acquisition étant une troisième phase de vol de croisière à une troisième vitesse.

Dès lors, un même type d'acquisition vibratoire permet de couvrir de multiples utilisations distinctes.

On note que cette spécification multiple n'a pas d'influence sur la pertinence des mesures.

En effet, le champ d'application d'un type d'acquisition vibratoire est augmenté par rapport à l'état de la technique en multipliant les conditions d'acquisition d'un type d'acquisition vibratoire. Toutefois, selon l'invention, on réalise l'acquisition vibratoire définie par un type d'acquisition vibratoire particulier uniquement si la phase de vol courante est égale à la condition d'acquisition élue de ce type d'acquisition vibratoire particulier, à savoir la condition d'acquisition la plus usitée dudit type d'acquisition vibratoire particulier.

Selon l'exemple précédent, si la première phase de vol est associée à une durée d'utilisation de 100 heures pour un aéronef donné alors que la deuxième phase de vol et la troisième phase de vol sont associées à des durées d'utilisation respectivement de 50 et 80 heures, on réalise l'acquisition vibratoire uniquement si la phase de vol courante est égale à la première phase de vol.

Par contre, la mise à jour du spectre de vol permet un apprentissage autonome. Si l'aéronef donné est utilisé différemment, la deuxième phase de vol ou la troisième phase de vol peuvent en effet devenir la condition d'acquisition élue à la place de la première condition d'acquisition.

Le procédé peut de plus comporter une ou plusieurs des caractéristiques suivantes.

Selon un exemple de mise en œuvre du procédé conforme à l'invention, les paramètres de vol sont à choisir dans une liste incluant : une vitesse de rotation d'au moins un moteur d'un aéronef, une vitesse de rotation d'un rotor de l'aéronef, un couple généré par ledit moteur, une position d'au moins une commande de vol, une localisation géographique de l'aéronef, une pression et une température extérieures à l'aéronef, une pression et une température d'un liquide hydraulique d'une boîte de transmission principale de puissance entraînant ledit rotor, une température des gaz présents dans ledit moteur, une altitude de l'aéronef, au moins une vitesse de déplacement dans l'espace de l'aéronef, au moins une accélération de l'aéronef, une quantité et un débit de carburant, une masse de l'aéronef

Selon un exemple de mise en œuvre du procédé conforme à l'invention, on utilise un algorithme pour calculer la phase de vol courante.

Selon un exemple de mise en œuvre conforme à l'invention, le procédé consiste à mettre en œuvre l'algorithme par l'utilisation d'un réseau de neurones.

Selon un exemple de mise en œuvre du procédé conforme à l'invention, chaque type d'acquisition vibratoire comporte au moins une caractéristique d'acquisition à choisir dans une liste comprenant au moins une fréquence d'échantillonnage, un nombre d'échantillons à acquérir, une fréquence de coupure haute.

Selon un exemple de mise en œuvre conforme à l'invention, le procédé consiste à utiliser les fonctions logicielles d'un système avionique embarqué HUMS ou HMS pour sa mise en œuvre.

Par ailleurs, selon une réalisation préférée, lorsque ledit type d'acquisition vibratoire particulier comporte une condition d'acquisition égale à la phase de vol courante et lorsque cette condition d'acquisition n'est pas la condition d'acquisition élue la plus utilisée du type d'acquisition vibratoire particulier, on inhibe l'acquisition vibratoire.

Par exemple, un type d'acquisition vibratoire particulier peut spécifier une première condition d'acquisition égale à une première phase de vol associée à une durée d'utilisation cumulée de 100 heures, et une deuxième condition d'acquisition égale à une deuxième phase de vol associée à une durée d'utilisation cumulée de 50 heures.

Lorsque la phase de vol courante n'est pas la phase de vol la plus utilisée du type d'acquisition vibratoire particulier, à savoir lorsque la phase de vol courante est la deuxième phase de vol selon cet exemple, on inhibe l'acquisition vibratoire.

Selon cette réalisation, l'acquisition vibratoire est active seulement lorsque la phase de vol la plus usitée d'un type d'acquisition vibratoire particulier représente la phase de vol courante. Ainsi, on évite d'une part de surcharger les moyens de stockage en inhibant l'acquisition vibratoire durant des phases de vol utilisées de manière limitée, et d'autre part de réaliser des mesures difficilement exploitables du fait de phases de vol définies de manière trop large.

Selon une première variante de cette réalisation, on inhibe l'acquisition vibratoire en ne déclenchant pas cette acquisition vibratoire.

Selon une deuxième variante, on inhibe l'acquisition vibratoire en ne mémorisant pas un signal vibratoire acquis par le dispositif de mesure vibratoire du type d'acquisition vibratoire particulier. On n'empêche donc pas l'acquisition vibratoire mais on ne traite pas le signal vibratoire généré par le dispositif de mesure vibratoire.

A l'inverse, lorsque ledit type d'acquisition vibratoire particulier comporte une condition d'acquisition correspondant à la phase de vol courante, et lorsque cette condition d'acquisition est la condition d'acquisition élue du type d'acquisition vibratoire particulier, on réalise ladite acquisition vibratoire en acquérant un signal vibratoire à l'aide du dispositif de mesure vibratoire dudit type d'acquisition vibratoire particulier, et on mémorise ledit signal vibratoire.

Selon l'exemple précédent, un type d'acquisition vibratoire particulier comportant une première condition d'acquisition égale à une première phase de vol associée à une durée d'utilisation cumulée de 100 heures, et une deuxième condition d'acquisition égale à une deuxième phase de vol associée à une durée d'utilisation cumulée de 50 heures, lorsque la première condition d'acquisition est égale à la phase de vol courante, on active le dispositif de mesure vibratoire adéquat et on mémorise les signaux vibratoires émis par ce dispositif de mesure vibratoire.

On note que le procédé conforme à l'invention présente l'avantage de générer une adaptation automatique de la configuration des systèmes embarqués pour le déclenchement automatique des acquisitions vibratoires.

Des surcoûts liés à un développement et à une gestion spécifique et manuelle de la configuration embarquée pour chaque aéronef, sont ainsi évités.

En outre, le procédé conforme à l'invention permet à chaque client de disposer d'une quantité optimale d'acquisitions vibratoires, indépendamment de l'usage de son aéronef.

Par ailleurs, la présente invention a aussi pour objet un système avionique embarqué mettant en œuvre le procédé explicité précédemment.

Ce système comporte une unité de traitement reliée à une pluralité de dispositif de mesure vibratoire et à une pluralité de capteurs de paramètres de vol, l'unité de traitement comprenant une mémoire et un organe de calcul exécutant des instructions en vol pour :
- lire des paramètres de vol provenant des capteurs de paramètres de vol,
- déterminer une phase de vol courante associée en fonction des paramètres de vol mesurés,
- actualiser un spectre de vol en modifiant une durée d'utilisation de ladite phase de vol courante,
- réaliser une acquisition vibratoire selon un type d'acquisition vibratoire particulier lorsqu'une condition d'acquisition élue du type d'acquisition vibratoire particulier est égale à ladite phase de vol courante, ladite unité de traitement sollicitant le dispositif de mesure vibratoire spécifié dans ledit type d'acquisition vibratoire particulier, la condition d'acquisition élue d'un type d'acquisition vibratoire étant la condition d'acquisition relative à la phase de vol de ce type d'acquisition vibratoire ayant la durée d'utilisation la plus élevée.

L'invention et ses avantages apparaîtront avec plus de détails dans le cadre de la description qui suit avec un exemple de mise en œuvre donné à titre illustratif et non limitatif, en référence aux figures annexées qui représentent :
- la figure 1, un schéma explicitant le système selon l'invention,
- la figure 2, un schéma illustrant les étapes du procédé conforme à l'invention.

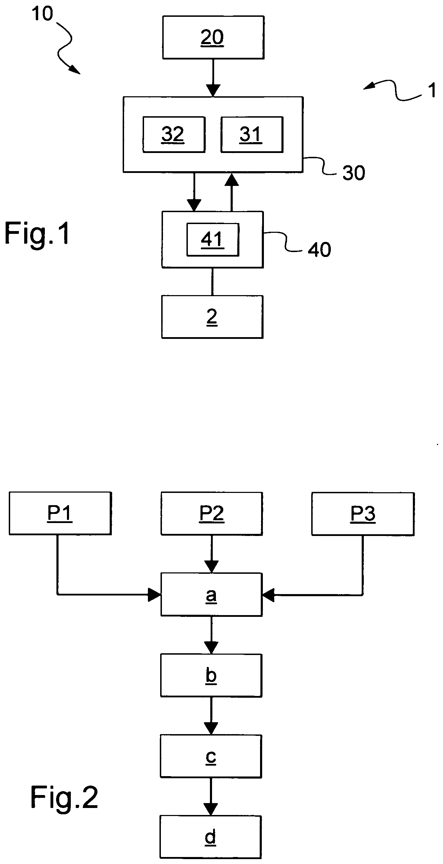

La figure 1 présente un aéronef 1 muni d'une pluralité de pièces 2 à surveiller.

Dès lors, l'aéronef 1 comporte un système 10 avionique embarqué réalisant des acquisitions vibratoires pour surveiller ces pièces 2.

Ce système 10 inclut une unité de traitement 30 comprenant au moins une mémoire 31 et un organe de calcul 32, l'organe de calcul 32 exécutant des instructions mémorisées dans la mémoire 31 pour surveiller des pièces 2 prédéterminées de l'aéronef 1.

Par suite, l'unité de traitement 30 est reliée à une pluralité de capteurs de paramètres de vol 20 usuels.

Ces capteurs de paramètres de vol 20 transmettent chacun un signal à l'unité de traitement relative à la valeur courante d'un paramètre de vol P à choisir dans une liste incluant : une vitesse de rotation d'au moins un moteur d'un aéronef, une vitesse de rotation d'un rotor de l'aéronef, un couple généré par ledit moteur, une position d'au moins une commande de vol, une localisation géographique de l'aéronef, une pression et une température extérieures à l'aéronef, une pression et une température d'un liquide hydraulique d'une boîte de transmission principale de puissance entraînant ledit rotor, une température des gaz présents dans ledit moteur, une altitude de l'aéronef, au moins une vitesse de déplacement dans l'espace de l'aéronef, au moins une accélération de l'aéronef, une quantité et un débit de carburant, une masse de l'aéronef.

De plus, l'unité de traitement 30 est reliée à un ensemble de moyens 40 aptes à réaliser des mesures vibratoires, cet ensemble de moyens 40 incluant une pluralité de dispositifs de mesure vibratoire 41. On entend par dispositif de mesure vibratoire tout dispositif permettant de transmettre des signaux vibratoires à l'unité de traitement relatif à une vibration d'un élément 2. Ainsi, un dispositif de mesure vibratoire peut par exemple comprendre au moins un accéléromètre et un capteur de tops de synchronisation en rotation pouvant transmettre chacun un signal dit « signal vibratoire » pouvant être traité afin de réaliser une analyse vibratoire.

L'unité de traitement peut alors solliciter des dispositifs de mesure vibratoire 41 pour requérir une acquisition vibratoire relative à au moins un élément 2, et mémoriser les signaux vibratoires acquis pour un traitement réalisé ultérieurement ou en parallèle selon des méthodes connues.

Ainsi, le système 10 permet de mettre en œuvre le procédé explicité par la figure 2.

Selon ce procédé, avant le premier vol d'un aéronef, un constructeur établit durant une première étape préliminaire une liste de phases de vol ϕi. Pour un giravion muni d'au moins un rotor principal, cette liste peut par exemple comporter au moins une des phases de vol suivantes :
- une phase de vol ϕ1 correspondant à un fonctionnement au sol avec NR<NRnominal, NR étant la vitesse de rotation du ou d'un rotor principal,
- une phase de vol ϕ2 correspondant à un fonctionnement au sol avec NR=NRnominal,
- une phase de vol ϕ3 correspondant à un vol stationnaire dans un effet de sol,
- une phase de vol ϕ4 correspondant à un vol stationnaire hors effet de sol,
- une phase de vol ϕ5 correspondant à un vol de croisière,
- une phase de vol ϕ6 correspondant à un vol à puissance maximale.

Durant une deuxième étape préliminaire P2, le constructeur initialise le spectre de vol S de l'aéronef.

Ce spectre de vol S associe chaque phase de vol à une durée d'utilisation. Avant le premier vol, chaque phase de vol est associée à une durée d'utilisation nulle par exemple.

On initialise alors les durées d'utilisation à zéro par exemple.

Il est à noter qu'un utilisateur peut à tout moment réinitialiser un spectre de vol. Par exemple, si un aéronef change de propriétaire, le nouveau propriétaire peut choisir de réinitialiser le spectre de vol.

Durant une troisième étape préliminaire P3, on établit une pluralité de types d'acquisition vibratoire acqₖ susceptibles d'être réalisées en vol pour surveiller des éléments 2.

Chaque type d'acquisition vibratoire spécifie les conditions de réalisation d'une acquisition vibratoire. Ainsi, chaque type d'acquisition vibratoire spécifie au moins une condition d'acquisition et au moins une caractéristique d'acquisition.

Dès lors, on entend par « condition d'acquisition » une condition permettant de déterminer quand une acquisition vibratoire doit être entreprise. Plus précisément, chaque condition d'acquisition est une phase de vol ϕi. Un type d'acquisition vibratoire particulier est donc réalisé uniquement lorsque l'aéronef évolue dans une des phases de vol ϕi spécifiée dans ce type d'acquisition vibratoire particulier.

Par ailleurs, ladite au moins une caractéristique d'acquisition inclut un dispositif de mesure vibratoire 41.

Un type d'acquisition vibratoire peut aussi comprendre au moins une caractéristique d'acquisition à choisir dans une liste préétablie comprenant au moins un des éléments suivants : une fréquence d'échantillonnage Fsₖ, un nombre d'échantillons à acquérir Nsₖ, une fréquence de coupure haute Fc_{k.}

Selon un autre aspect et en vol, l'unité de traitement met en œuvre une pluralité d'étapes pour réaliser la surveillance des pièces 2 de l'aéronef.

Durant une première étape de surveillance a, on lit les paramètres de vol P. En effet, l'unité de traitement reçoit pour traitement les informations relatives à ces paramètres de vol P transmises par les capteurs de paramètres de vol 20.

Durant une deuxième étape de surveillance b, on détermine au fil du temps la phase de vol courante dans laquelle l'aéronef est en train d'évoluer.

Ainsi, l'unité de traitement utilise les données relatives aux paramètres de vol P mesurés en temps réel pour déterminer la phase de vol courante.

Par suite, l'organe de calcul 32 fait par exemple appel à un algorithme FRR pour déterminer cette phase de vol courante.

L'organe de calcul 32 peut notamment utiliser un réseau de neurones, tel qu'un réseau à apprentissage compétitif de type « SOM » dénommé « Self-Organizing Maps » en langue anglaise, ou de type LVQ dénommé « Learning Vector Quantization » en langue anglaise et favorablement mis en œuvre pour son espace de sortie fini.

Durant une troisième étape de surveillance c, on actualise le spectre de vol S en actualisant la durée d'utilisation de la phase courante.

Ainsi, l'unité de traitement comptabilise le temps d'utilisation de la phase de vol courante. Dès lors, l'organe de calcul 32 met à jour le spectre de vol S en ajoutant le temps d'utilisation courant à la durée d'utilisation de la phase de vol courante du spectre de vol.

Par exemple, le spectre de vol associe une durée d'utilisation de 100 heures à une phase de vol spécifique. Ainsi si durant un vol l'aéronef évolue durant 1 heure dans cette phase de vol spécifique, l'organe de calcul 32 met à jour la durée d'utilisation, cette durée d'utilisation devenant égale à 101 heures. Cette mise à jour peut être réalisée au fil du temps, ou suite à l'évolution de l'aéronef dans cette phase de vol spécifique par exemple.

Il est à noter que le spectre de vol peut être mis à jour selon un cycle prédéterminé, ou à l'issue de chaque vol, ou encore à l'issue de chaque changement de phase de vol par exemple.

Durant une quatrième étape de surveillance d, si la phase de vol courante est égale à la condition d'acquisition élue d'un type d'acquisition vibratoire particulier, on réalise une acquisition vibratoire conformément aux dispositions prévues par ce type d'acquisition vibratoire particulier.

Par suite, l'unité de traitement sollicite le dispositif de mesure vibratoire 41 adéquat pour réaliser l'acquisition vibratoire.

Plus particulièrement, si un type d'acquisition vibratoire comprend au moins deux conditions d'acquisitions relatives à deux phases de vol distinctes, on détermine si la phase de vol courante représente la phase de vol du type d'acquisition vibratoire associée à la plus grande durée d'utilisation à savoir la condition d'acquisition dite condition d'acquisition élue.

Dans l'affirmative, on réalise ladite acquisition vibratoire en acquérant un signal vibratoire à l'aide du dispositif de mesure vibratoire spécifié dans ledit type d'acquisition vibratoire particulier, et on mémorise ledit signal vibratoire. L'organe de calcul 32 ordonne donc à ces dispositifs de mesure vibratoire de procéder à des mesures, puis mémorise dans la mémoire 31 les signaux vibratoires reçus.

Dans la négative, on peut inhiber l'acquisition vibratoire en ne déclenchant pas une acquisition vibratoire, ou en inhibant la mémorisation des signaux vibratoires.

Si deux phases de vol de deux conditions d'acquisition spécifiques d'un type d'acquisition vibratoire sont associées à une même durée d'utilisation et qu'en plus cette durée est la durée la plus grande des conditions d'acquisition du type, ces deux phases de vol représentent de fait l'une et l'autre la phase de vol la plus utilisée de ce type d'acquisition vibratoire.

Lorsque la phase de vol courante est égale à une desdites deux conditions d'acquisitions spécifiques, on réalise ladite acquisition vibratoire.

Naturellement, la présente invention est sujette à de nombreuses variations quant à sa mise en œuvre. Bien que tous les modes de mise en œuvre n'aient été décrits, on comprend bien qu'il n'est pas concevable d'identifier de manière exhaustive tous les modes possibles. Il est bien sûr envisageable de remplacer une étape décrite par une étape équivalente sans sortir du cadre de la présente invention.

## Revendications

1. Procédé de surveillance d'un aéronef (1) par acquisitions vibratoires en vol, au cours duquel :
• durant une étape préalable aux vols :
- on établit une pluralité de types d'acquisition vibratoire (acqₖ) spécifiant chacun au moins une condition d'acquisition déterminant quand une acquisition vibratoire doit être entreprise et au moins une caractéristique d'acquisition déterminant comment réaliser ladite acquisition vibratoire, une caractéristique d'acquisition incluant au moins un dispositif de mesure vibratoire (41), chaque condition d'acquisition étant une phase de vol,
- on initialise un spectre de vol (S) associant chaque phase de vol (ϕi) à une durée d'utilisation de ladite phase de vol depuis une date donnée,
• en vol :
- a) on lit des paramètres de vol (P) mesurés par des capteurs de paramètres de vol (20),
- b) on détermine une phase de vol courante en fonction des paramètres de vol mesurés (P),
- c) on actualise le spectre de vol (S) en modifiant la durée d'utilisation de ladite phase de vol courante,
- d) au moins un type d'acquisition vibratoire spécifiant une pluralité de conditions d'acquisition, une condition d'acquisition élue du type d'acquisition vibratoire étant la condition relative à la phase de vol de ce type d'acquisition vibratoire ayant la durée d'utilisation la plus élevée, on réalise une acquisition vibratoire selon un type d'acquisition vibratoire particulier lorsque la condition d'acquisition élue dudit type d'acquisition vibratoire particulier est égale à ladite phase de vol courante.

2. Procédé selon la revendication 1,
**caractérisé en ce que** lesdits paramètres de vol sont à choisir dans une liste incluant : une vitesse de rotation d'au moins un moteur d'un aéronef, une vitesse de rotation d'un rotor de l'aéronef, un couple généré par ledit moteur, une position d'au moins une commande de vols, une localisation géographique de l'aéronef, une pression et une température extérieures à l'aéronef, une pression et une température d'un liquide hydraulique d'une boîte de transmission principale de puissance entraînant ledit rotor, une température des gaz présents dans ledit moteur, une altitude de l'aéronef, au moins une vitesse de déplacement dans l'espace de l'aéronef, au moins une accélération de l'aéronef, une quantité et un débit de carburant, une masse de l'aéronef.

3. Procédé selon l'une quelconque des revendications 1 ou 2,
**caractérisé en ce qu'**il consiste à utiliser un algorithme (FRR) pour déterminer la phase de vol courante.

4. Procédé selon la revendication 3,
**caractérisé en ce qu'**il consiste à mettre en œuvre l'algorithme (FRR) par l'utilisation d'un réseau de neurones.

5. Procédé selon l'une quelconque des revendications 1 à 4,
**caractérisé en ce que** chaque type d'acquisition vibratoire (acqₖ) comporte au moins une caractéristique d'acquisition à choisir dans une liste comprenant au moins une fréquence d'échantillonnage (Fsₖ), un nombre d'échantillons à acquérir (Nsₖ), une fréquence de coupure haute (Fcₖ).

6. Procédé selon l'une quelconque des revendications 1 à 5,
**caractérisé en ce que**, lorsque ledit type d'acquisition vibratoire particulier comporte une condition d'acquisition correspondant à ladite phase de vol courante, et lorsque cette condition d'acquisition n'est pas la condition d'acquisition la plus utilisée du type d'acquisition vibratoire particulier, on inhibe ladite acquisition vibratoire.

7. Procédé selon la revendication 6,
**caractérisé en ce que**, on inhibe ladite acquisition vibratoire en ne mémorisant pas un signal vibratoire acquis par le dispositif de mesure vibratoire dudit type d'acquisition vibratoire particulier.

8. Système (10) avionique embarqué mettant en œuvre ledit procédé selon l'une quelconque des revendications 1 à 7,
**caractérisé en ce qu'**il comporte une unité de traitement (30) reliée à une pluralité de dispositifs de mesure vibratoire (41) et à une pluralité de capteurs de paramètres de vol (20), ladite unité de traitement (30) comprenant une mémoire (31) et un organe de calcul (32) exécutant des instructions en vol pour :
- lire des paramètres de vol (P) provenant des capteurs de paramètres de vol (20),
- déterminer une phase de vol courante (ϕi) en fonction des paramètres de vol mesurés (P),
- actualiser un spectre de vol (S) en modifiant une durée d'utilisation de ladite phase de vol courante,
- réaliser une acquisition vibratoire selon un type d'acquisition vibratoire particulier lorsqu'une condition d'acquisition élue du type d'acquisition vibratoire particulier est égale à ladite phase de vol courante, ladite unité de traitement sollicitant le dispositif de mesure vibratoire spécifié dans ledit type d'acquisition vibratoire particulier, la condition d'acquisition élue d'un type d'acquisition vibratoire étant la condition d'acquisition relative à la phase de vol de ce type d'acquisition vibratoire ayant la durée d'utilisation la plus élevée.

## Patentansprüche

1. Verfahren zur Überwachung eines Luftfahrzeugs (1) durch Schwingungserfassung während des Fluges, bei dem :
• während einer Phase vor den Flügen:
- mehrere Arten der Schwingungserfassung (acqₖ) eingerichtet werden, von denen jede mindestens eine Erfassungsbedingung, die bestimmt, wann eine Schwingungserfassung durchgeführt werden muss, und mindestens ein Erfassungsmerkmal, das bestimmt, wie die Schwingungserfassung durchzuführen ist, spezifiziert, wobei ein Erfassungsmerkmal mindestens eine Schwingungsmessvorrichtung (41) umfasst, wobei jede Erfassungsbedingung eine Flugphase ist,
- ein Flugspektrum (S) initialisiert wird, das jede Flugphase (ϕi) mit einer Dauer der Nutzung dieser Flugphase seit einem bestimmten Datum verknüpft,
• während des Fluges:
a) die von den Flugparametersensoren (20) gemessenen Flugparameter (P) ausgelesen werden,
b) eine aktuelle Flugphase auf der Grundlage der gemessenen Flugparameter (P) bestimmt wird,
c) das Flugspektrum (S) durch Änderung der Dauer der Nutzung der aktuellen Flugphase aktualisiert wird,
d) mindestens eine Art von Schwingungserfassung eine Mehrzahl von Erfassungsbedingungen spezifiziert, und eine ausgewählte Erfassungsbedingung der Art der Schwingungserfassung die Flugphasenbedingung zu der Art der Schwingungserfassung mit der längsten Nutzungsdauer ist, und eine Schwingungserfassung gemäß einer bestimmten Art der Schwingungserfassung durchgeführt wird, wenn die ausgewählte Erfassungsbedingung der bestimmten Art der Schwingungserfassung gleich der aktuellen Flugphase ist.

2. Verfahren nach Anspruch 1,
**dadurch gekennzeichnet, dass** die Flugparameter aus einer Liste auszuwählen sind, die enthält: eine Drehzahl mindestens eines Triebwerks eines Luftfahrzeugs, eine Drehzahl eines Rotors des Luftfahrzeugs, ein von diesem Triebwerk erzeugtes Drehmoment, eine Position mindestens einer Flugsteuerung, eine geographische Lage des Luftfahrzeugs, ein Druck und eine Temperatur außerhalb des Luftfahrzeugs, ein Druck und eine Temperatur einer Hydraulikflüssigkeit eines Hauptantriebsgetriebes, das den Rotor antreibt, eine Temperatur der in dem Triebwerk vorhandenen Gase, eine Flughöhe des Luftfahrzeugs, mindestens eine Fortbewegungsgeschwindigkeit des Luftfahrzeugs im Raum, mindestens eine Beschleunigung des Luftfahrzeugs, eine Menge und ein Durchsatz von Kraftstoff, eine Masse des Luftfahrzeugs.

3. Verfahren nach einem der Ansprüche 1 oder 2,
**dadurch gekennzeichnet, dass** es darin besteht, einen Algorithmus (FRR) zur Bestimmung der aktuellen Flugphase zu verwenden.

4. Verfahren nach Anspruch 3,
**dadurch gekennzeichnet, dass** es darin besteht, den Algorithmus (FRR) unter Verwendung eines neuronalen Netzes zu implementieren.

5. Verfahren nach einem der Ansprüche 1 bis 4,
**dadurch gekennzeichnet, dass** jede Art der Schwingungserfassung (acqₖ) mindestens ein Erfassungsmerkmal umfasst, das aus einer Liste auszuwählen ist, die mindestens eine Abtastfrequenz (Fsₖ), eine Anzahl von zu erfassenden Abtastwerten (Nsₖ) und eine obere Grenzfrequenz (Fcₖ) umfasst.

6. Verfahren nach einem der Ansprüche 1 bis 5,
**dadurch gekennzeichnet, dass**, wenn die bestimmte Art der Schwingungserfassung eine Erfassungsbedingung umfasst, die der aktuellen Flugphase entspricht, und wenn diese Erfassungsbedingung nicht die am meisten verwendete Erfassungsbedingung der bestimmten Art der Schwingungserfassung ist, die Schwingungserfassung gesperrt wird.

7. Verfahren nach Anspruch 6,
**dadurch gekennzeichnet, dass** die Schwingungserfassung dadurch gesperrt wird, dass ein von der Schwingungsmessvorrichtung erfasstes Schwingungssignal der bestimmten Art von Schwingungserfassung nicht gespeichert wird.

8. Bordeigenes Avioniksystem (10), das das Verfahren nach einem der Ansprüche 1 bis 7 anwendet,
**dadurch gekennzeichnet, dass** es eine Verarbeitungseinheit (30) umfasst, die mit einer Mehrzahl von Schwingungsmessvorrichtungen (41) und mit einer Mehrzahl von Flugparametersensoren (20) verbunden ist, wobei die Verarbeitungseinheit (30) einen Speicher (31) und ein Rechenelement (32) umfasst, das im Flug Befehle ausführt zum:
- Auslesen der Flugparameter (P) von den Flugparametersensoren (20),
- Bestimmen einer aktuellen Flugphase (ϕi) in Abhängigkeit von den gemessenen Flugparametern (P),
- Aktualisieren eines Flugspektrums (S) durch Ändern einer Dauer der Nutzung der besagten aktuellen Flugphase,
- Durchführen einer Schwingungserfassung gemäß einer bestimmten Art der Schwingungserfassung, wenn eine ausgewählte Erfassungsbedingung der bestimmten Art der Schwingungserfassung gleich der aktuellen Flugphase ist, wobei die Verarbeitungseinheit die in der bestimmten Art der Schwingungserfassung spezifizierte Schwingungsmessvorrichtung aufruft, wobei die ausgewählte Erfassungsbedingung einer Art der Schwingungserfassung die Erfassungsbedingung zu der Flugphase dieser Art der Schwingungserfassung mit der höchsten Nutzungsdauer ist.

## Claims

1. Method for monitoring an aircraft (1) by vibration acquisitions in flight, in the course of which:
• during a stage prior to flights:
- a plurality of types of vibration acquisition (acqₖ) is established, each specifying at least one acquisition condition determining when a vibration acquisition should be carried out and at least one acquisition characteristic determining how to carry out said vibration acquisition, an acquisition characteristic including at least one vibration measurement device (41), each acquisition condition being a flight phase,
- a flight spectrum (S) is initiated associating each flight phase (ϕi) with a duration of use of said flight phase from a given date,
• in flight:
- a) flight parameters (P) measured by flight parameter sensors (20) are read,
- b) a current flight phase is determined according to the measured flight parameters (P),
- c) the flight spectrum (S) is updated by modifying the duration of use of said current flight phase,
- d) at least one type of vibration acquisition specifying a plurality of acquisition conditions, an acquisition condition chosen from the type of vibration acquisition being the condition relating to the flight phase of this type of vibration acquisition having the longest duration of use, a vibration acquisition is carried out according to a particular type of vibration acquisition when the chosen acquisition condition of said particular type of vibration acquisition is equal to said current flight phase.

2. Method according to claim 1,
**characterised in that** said flight parameters are chosen from a list including: a speed of rotation of at least one engine of an aircraft, a speed of rotation of a rotor of the aircraft, a torque generated by said engine, a position of at least one flight control, a geographical location of the aircraft, a pressure and a temperature outside the aircraft, a pressure and a temperature of a hydraulic fluid of a main power gearbox driving said rotor, a temperature of the gases present in said engine, an altitude of the aircraft, at least one speed of movement in the space of the aircraft, at least one acceleration of the aircraft, a quantity and a flow rate of fuel, a mass of the aircraft.

3. Method according to either of claims 1 and 2, **characterised in that** it consists in using an algorithm (FRR) to determine the current flight phase.

4. Method according to claim 3,
**characterised in that** it consists in implementing the algorithm (FRR) by using a neural network.

5. Method according to any one of claims 1 to 4,
**characterised in that** each type of vibration acquisition (acqₖ) comprises at least one acquisition characteristic to be chosen from a list comprising at least one sampling frequency (Fsₖ), a number of samples to be acquired (Nsₖ), a high cut-off frequency (Fcₖ).

6. Method according to any one of claims 1 to 5,
**characterised in that** when said particular type of vibration acquisition comprises an acquisition condition corresponding to said current flight phase, and when this acquisition condition is not the most used acquisition condition of the particular type of vibration acquisition, said vibration acquisition is inhibited.

7. Method according to claim 6, **characterised in that** said vibration acquisition is inhibited by not storing a vibration signal acquired by the vibration measurement device of said particular type of vibration acquisition.

8. On-board avionics system (10) implementing said method according to any one of claims 1 to 7,
**characterised in that** it comprises a processing unit (30) connected to a plurality of vibration measurement devices (41) and to a plurality of flight parameter sensors (20), said processing unit (30) comprising a memory (31) and a calculation unit (32) executing flight instructions for:
- reading flight parameters (P) obtained from flight parameter sensors (20),
- determining a current flight phase (ϕi) according to the measured flight parameters (P),
- updating a flight spectrum (S) by modifying a duration of use of said current flight phase,
- performing a vibration acquisition according to a particular type of vibration acquisition when a chosen acquisition condition of the particular type of vibration acquisition is equal to said current flight phase, said processing unit requesting the vibration measurement device specified in said particular type of vibration acquisition, the chosen acquisition condition of a type of vibration acquisition being the acquisition condition relating to the flight phase of this type of vibration acquisition having the longest duration of use.
